# EUROPÄISCHE PATENTSCHRIFT

(11) **EP 3 701 584 B1**
(45) Veröffentlichungstag und Bekanntmachung des Hinweises auf die Patenterteilung: **25.05.2022**
(21) Anmeldenummer: 18753334.4
(22) Anmeldetag: 31.07.2018
(51) Int. Cl.: H01M 10/44, H01M 10/42, H02J 7/00, H01M 10/48, H02J 7/04

(54) **VERFAHREN ZUM AUF- ODER ENTLADEN EINES ENERGIESPEICHERS**
METHOD FOR CHARGING OR DISCHARGING AN ENERGY STORE
PROCÉDÉ DE CHARGE OU DE DÉCHARGE D'UN ACCUMULATEUR D'ÉNERGIE

(30) Priorität: 23.10.2017 DE 102017009850
(43) Veröffentlichungstag der Anmeldung: 02.09.2020
(73) Patentinhaber: Benning CMS Technology GmbH, 79232 March (DE)
(72) Erfinder: WALTER, Wolfram, 79427 Eschbach (DE)
(74) Vertreter: Geitz Truckenmüller Lucht Christ
(86) Internationale Anmeldenummer: PCT/EP2018/070791
(87) Internationale Veröffentlichungsnummer: WO 2019/081084

(56) Entgegenhaltungen:
- WO-A1-2012/139604
- DE-A1- 10 035 959
- DE-A1-102012 020 544
- DE-T5-112011 104 434

## Beschreibung

Die Erfindung betrifft ein Verfahren zum Auf- oder Entladen eines Energiespeichers mit mindestens einen aus mehreren seriell miteinander verbundenen Batteriezellen bestehenden Zellblock mittels eines durch alle Batterien fließenden seriellen Lade- oder Entladestromes, wobei mindestens einige der Batteriezellen unterschiedliche Kapazitäten aufweisen können.

Bei Energiespeichern (Akkumulatoren), die aus mehreren seriell miteinander verbundenen wiederaufladbaren Batteriezellen bestehen, ist es unter anderem für die Lebensdauer des Energiespeichers wichtig, dass jede einzelne Zelle beim Aufladen des Energiespeichers weder überladen noch unterladen wird und alle Zellen möglichst den gleichen Ladezustand aufweisen. Dieses gilt insbesondere für Energiespeicher, die aus mehreren seriell miteinander verbundenen Lithium-Ionen-Batterien, Lithium-Polymer-Batterien und/oder Lithium-Eisen-Phosphat-Batterien bestehen.

In der Regel sind derartige Energiespeicher daher jeweils mit einer häufig auch als Batteriemanagement-System bezeichneten Vorrichtung verbunden, die einerseits mittels einer Ladekontrolleinrichtung den Ladezustand der einzelnen Batteriezellen ständig überwacht und andererseits versucht, bei unterschiedlichen Ladezuständen der einzelnen Batteriezellen diese auszugleichen. Dabei kann der auch als Balancing bezeichnete Ausgleich der Ladezustände der Batteriezellen durch passives oder aktives Balancing erfolgen. Außerdem beginnt bei den bekannten Batteriemanagementsystemen der Ladungsausgleich erst, wenn mindestens eine der Batteriezellen voll geladen ist, so dass der gesamte Ladevorgang eines Zeltblockes relativ zeitaufwendig ist.

Bei dem passiven Balancing wird hei derjenigen Batteriezelle, die ihre Ladeschlussspannung als erstes erreicht hat, die überschüssige Energie über einen Widerstand in Wärme umgewandelt und geht damit für den Ladevorgang verloren.

Bei dem aktiven Balancing wird hingegen die Energie, die man einer Batteriezelle mit zu hoher Zellspannung entnimmt, nicht in thermische Energie umgewandelt, sondern zum Laden der anderen Zellen des Energiespeichers verwendet. Allerdings beginnt auch bei dem aktiven Balancing der Ladungsausgleich erst wenn mindestens eine der Batteriezellen des Zellblockes ihre Ladeschlussspannung erreicht hat.

Aus der EP 1 941 594 B1 ist ein Verfahren zum Aufladen eines Energiespeichers mit einem aus mehreren seriell miteinander verbundenen Batteriezellen bestehenden Zellblock bekannt, bei dem vorgeschlagen wird, das Aufladen der Batteriezellen durch einen, durch alle Batteriezellen hindurchfließenden seriellen Ladestromes vorzunehmen und eine ausgewählte Batteriezelle durch einen zusätzlichen selektiven Ladevorgang definiert zu überladen. Anschließend erfolgt ein Angleichen des Ladezustandes der ausgewählten Batteriezelle an die Ladezustände der anderen Batteriezellen. Zum selektiven Laden der ausgewählten Batteriezelle wird vorzugsweise der Zellblock verwendet. Ein derartiges Überladen einzelner Batteriezellen ist zwar bei Blei- oder Nickel-Cadmium-Batterien, nicht hingegen bei Lithium-Ionen-Batterien, Lithium-Polymer-Batterien und/oder Lithium-Eisen-Phosphat-Batterien möglich, die sofort zerstört werden würden.

Aus der DE 10 2010 017 439 A1 ist ein Verfahren zum Aufladen eines Energiespeichers mit mehreren seriell miteinander verbundenen Batteriezellen bekannt, bei dem die einzelnen Batteriezellen getrennt über entsprechende, mit dem Wechselspannungsnetz verbundene Hilfsladeregler aufgeladen werden und anschließend dann ein Ladungsausgleich zwischen den einzelnen Zellen mittels dieser Hilfsladeregler vorgenommen wird.

Schließlich ist aus der DE 10 2012 020 544 A1 ein Verfahren zum Aufladen eines Energiespeichers mit mehreren seriell miteinander verbundenen Batteriezellen bekannt, bei dem zur Beschleunigung des Aufladevorganges zusätzlich zu dem alle Zellen durchfließenden seriellen Ladestrom ein Hilfsladestrom den Batteriezellen zugeführt wird, bei denen ein Unterschreiten des jeweils vorgegebenen Ladezustandes gemessen wird. Zum selektiven Laden der ausgewählten Batteriezellen wird bei diesem Verfahren vorzugsweise eine separate Gleichstromquelle verwendet.

Aus der WO 2012/139604 A1 ist ein Verfahren zum Laden eines Energiespeichers bekannt, der einen Zellenblock mit mehreren in Serie geschalteten Zellen besitzt. Dabei werden in einem Initialisierungsprozess die individuellen Zellparameter bestimmt. Hierzu zählen unter anderem eine Ladeschlussspannung und eine Entladeschlussspannung für die jeweiligen Zellen. Im Betriebsprozess erfolgt das Entladen und Wiederaufladen der einzelnen Zellen auf Basis der vorgegebenen Ladeschlussspannungen oder Entladeschlussspannungen.

Aus der DE 11 2011 104434 T5 ist ein Verfahren zum Laden- und Entladen eines Energiespeichers bekannt, der einen Zellenblock mit mehreren in Serie geschalteten Zellen aufweist. Dabei wird für jede Zelle ein Zellenkapazitätswert bestimmt, aus dem wiederum ein Entladungszellenkapazitätswert bestimmt wird. Auf der Grundlage des Entladungszellenkapazitätswerts wird der Lade- und Entladevorgang gesteuert.

Die DE 100 35 959 A1 offenbart ein Verfahren zum Entladen eines Energiespeichers, der einen Zellenblock mit mehreren in Serie geschalten Zellen aufweist. Dabei wird die Kapazität jeder Zelle erfasst. Während des Entladevorgangs wird eine dem Zellenblock entnommene Ausgangsspannung an die Zelle mit der geringsten Kapazität angelegt. Dies wird mittels eines DC/DC Wandlers gemacht, der den Entladestrom durch die Zelle mit der geringsten Kapazität verringern kann.

Bei den vorgenannten bekannten Verfahren wird zur Bestimmung des jeweiligen Ladezustandes einer entsprechenden Batteriezelle deren jeweilige Zellspannung gemessen und dann beim Über- oder Unterschreiten vorgegebener Zellspannungswerte gegebenenfalls ein Ladungsausgleich zwischen den Batteriezellen unterschiedlicher Ladezuständen eingeleitet. Dabei tritt allerdings das Problem auf, dass die Zellspannung während des jeweiligen Ladevorganges einer Batteriezelle weitgehend konstant bleibt, so dass es schwierig ist, aus der Zellspannung auf den augenblicklichen Ladezustand der entsprechenden Batteriezelle zu schließen. Lediglich kurz vor Erreichen der jeweiligen Lade- bzw. Entladeschlussspannung ergibt sich ein relativ starker Anstieg bzw. Abfall der jeweiligen Zellspannung, der für entsprechende Regelungsvorgänge für einen Ladungsausgleich herangezogen werden kann.

Der Erfindung liegt die Aufgabe zugrunde, ein Verfahren zum Laden oder Entladen von Energiespeichern bereitzustellen, das ein gegenüber bekannten Verfahren zuverlässigeres und schnelleres Aufladen oder Entladen des Energiespeichers ermöglicht, und zwar insbesondere auch dann, wenn die einzelnen Batteriezellen des Zellblockes unterschiedliche Kapazitäten besitzen. Außerdem soll es möglich sein, zu jedem Zeitpunkt des Lade- oder Entladevorganges für jede der Batteriezellen deren jeweiligen Lade- oder Entladezustand anzugeben.

Diese Aufgabe wird erfindungsgemäß hinsichtlich des Ladens des Energiespeichers durch die Merkmale des Anspruchs 1 und hinsichtlich des Entladens des Energiespeichers durch die Merkmale des Anspruchs 2 gelöst. Weitere, besonders vorteilhafte Ausgestaltungen der Erfindung offenbaren die Unteransprüche.

Im Gegensatz zu der bekannten Verfahren, bei denen das Laden der einzelnen Batteriezellen durch Messen der Zeltspannungen kontrolliert und aufgrund der gemessenen Zellspannungen dann ein Ladungsausgleich zwischen den einzelnen Batteriezellen erst dann vorgenommen wird, wenn mindestens eine der Batteriezellen voll geladen ist, schlägt die Erfindung vor, in regelmäßigen Zeitabständen die Kapazitäten C_{N} der N Batteriezellen eines Zellblockes zu messen und aufgrund der gemessenen Kapazitäten und eines vorgegebenen C-Faktors (Quotient von maximalem Ladestrom I_{N;max}, zur Kapazität C_{N}) für jede Batteriezelle deren Ladestrom zu bestimmen. Mit diesen Ladeströmen werden dann während einer durch den C-Faktor vorgegebenen Ladezeit t (t ≤ 1/C) gleichzeitig die N Batteriezellen geladen. Dabei werden die Batteriezellen, deren maximaler Ladestrom dem seriellen Ladestrom Io entspricht, nur von dem seriellen Ladestrom geladen, die Batteriezellen, deren maximaler Ladestrom I_{N;max} größer als der serielle Ladestrom ist, gleichzeitig von dem seriellen Ladestrom und über Hilfs-Lade-/Entladeeinrichtungen von dem Zellblock entnehmbaren Hilfsladeströmen I_{N} geladen, für die I_{N} = I_{N;max}- I_{O} gilt, und die Batteriezellen, deren maximaler Ladestrom I_{N;max} kleiner als der serielle Ladestrom I_{O} ist, von dem seriellen Ladestrom geladen, wobei gleichzeitig die die maximalen Ladeströme I_{N;max} übersteigenden Ströme: I_{O} - I_{N;max}, von Hilfs-Lade-/Entladeeinrichtungen als Hilfsentladeströme dem Zellblock zugeführt werden.

Sofern beispielsweise aufgrund der geringen zur Verfügung stehenden Spannung einer Energiequelle die berechneten maximalen Ladeströme (I_{N;max}) alle größer sind als der zur Verfügung stehende serielle Ladestrom (lo), erfolgt die gleichzeitige Aufladung aller Batteriezellen mit Ladeströmen, deren Werte im gleichen Verhältnis wie die berechneten maximalen Ladeströme (I_{N;max}) zueinander stehen.

Hinsichtlich des Entladens des Energiespeichers gilt das Vorstehende entsprechend. Lediglich die Stromrichtungen kehren sich um, d.h. der Ladestrom wird nun zum Entladestrom, die Hilfsladeströme zu Hilfsentladeströmen und die Hilfsentladeströme zu Hilfsladeströmen.

Bei Verwendung des erfindungsgemäßen Verfahrens haben alle Batteriezellen beim Laden oder Entladen jeweils den gleichen Ladungszustand bezogen auf ihre jeweilige Nutzkapazität. Damit ist es möglich, zu jedem Zeitpunkt, bezogen auf den maximal geladenen oder entladenen Zustand des Zellblockes, den jeweiligen Ladezustand jeder der Batteriezellen dieses Zellblockes anzugeben.

Die maximale Lade- oder Entladezeit ergibt sich bei diesem Verfahren aus der Beziehung tₘₐₓ = 1/C und ist für alle Batteriezellen gleich und deutlich kürzer als dieses mit bekannten Verfahren möglich ist. Bei Einhaltung dieser Lade- oder Entladezeit kommt es zur keiner Über- oder Unterladung einzelner Zellen.

Da alle Batteriezellen, unabhängig von ihrer jeweiligen Kapazität, nach der maximalen Ladezeit jeweils den gleichen Ladungszustand bezogen auf ihre jeweilige Nutzkapazität, besitzen, kann auf ein zusätzliches aktives oder passives Balancing verzichtet werden.

Bei einem ersten bevorzugten Ausführungsbeispiel der Erfindung ist vorgesehen, dass der serielle Ladestrom derart gewählt wird, dass die Batteriezelle mit der geringsten Kapazität mit ihrem maximalen Ladestrom geladen wird und dass die weiteren Zellen zusätzlich zu dem seriellen Ladestrom jeweils mit einem maximalen Hilfsladestrom geladen werden, der sich aus der Differenz zwischen der Kapazität der jeweiligen Batteriezelle und der Batteriezelle mit der geringsten Kapazität ergibt.

Bei einem zweiten Ausführungsbeispiel ist vorgesehen, dass der serielle Ladestrom derart gewählt wird, dass er dem maximalen Ladestrom einer aus allen Batteriezellen ermittelten mittleren Kapazität entspricht. Während des Ladevorganges wird dann bei den Batteriezellen, die eine geringere Kapazität als die mittlere Kapazität aufweisen, ein Teil des seriellen Ladestromes über die zugeordneten Hilfs-Lade-/Entladeeinrichtungen wieder dem Zellblock zugeführt. Hingegen werden die Batteriezellen, die eine höhere Kapazität besitzen als die mittlere Kapazität, gleichzeitig von dem seriellen Ladestrom und von Hilfsladeströmen geladen.

Bei einem dritten Ausführungsbeispiel ist vorgesehen, dass der serielle Ladestrom derart gewählt wird, dass die Batteriezelle(n) mit der höchsten Kapazität mit ihrem maximalen Ladestrom geladen wird (werden). Die weiteren Zellen werden in diesem Fall nur teilweise von dem seriellen Ladestrom geladen und der jeweils überschüssige Stromanteil des seriellen Ladestromes über zugeordnete Hilfs-Lade/Entladeeinrichtungen wieder dem Zellblock zugeführt.

Für das Entladen des Energiespeichers gilt für die drei vorstehend beschriebenen Ausführungsbeispiele wiederum, dass sich lediglich die Stromrichtungen ändern, der Ladestrom also zum Entladestrom, die Hilfsladeströme zu Hilfsentladeströmen und die Hilfsentladeströme zu Hilfsladeströmen werden.

Damit zur Bestimmung der Batteriekapazitäten das bestimmungsgemäße Laden und Entladen des Energiespeichers ohne zeitaufwendige Unterbrechung erfolgt, werden die Kapazitätsmessungen vorzugsweise in bestimmten zeitlichen Abständen automatisch bei in Serie geschalteten Batteriezellen vorgenommen.

Bei einem ersten bevorzugten Ausführungsbeispiel werden hierzu die Batteriezellen zunächst bis zum Erreichen ihrer Ladeschlussspannung durch den seriellen Ladestrom geladen, wobei ein Überladen derjenigen Batteriezellen, die zunächst ihre Ladeschlussspannung erreicht haben, dadurch verhindert wird, dass der überschüssige Stromanteil über die ihnen zugeordneten Hilfs-Lade-/Entladeeinrichtung wiederum dem Zellblock zugeführt wird. Anschließend werden dann die Batteriezellen mit einem bestimmten seriellen Entladestrom so lange entladen, bis die Entladeschlussspannung der Batteriezelle mit der größten Kapazität erreicht wird. Um ein Unterladen derjenigen Batteriezellen, die vor der Batterie mit der größten Kapazität ihre Entladeschlussspannungen erreicht haben, zu vermeiden, werden diesen Batteriezellen über die ihnen zugeordneten Hilfs-Lade-/Entladeeinrichtungen nach Erreichen ihrer Entladeschlussspannungen aus dem Zellblock Strom zugeführt.

Aus dem zeitlichen Verlauf des Entladestromes zwischen dem geladenen Zustand der Batteriezellen und dem Erreichen der Entladeschlussspannung der jeweiligen Batteriezelle ergibt sich dann die Kapazität der entsprechenden Batteriezelle (Kapazität (C_{N}) = Entladestrom (Io') x Entladezeit (t)), die anschließend für die weiteren optimalen Lade- und Entladevorgänge des Zellblockes verwendet wird.

Selbstverständlich kann zur Kapazitätsermittlung auch der zeitliche Verlauf des Ladevorganges herangezogen werden oder es kann ein Mittelwert zwischen den bei der Entladung und der Ladung der Batterie ermittelten Kapazitätswerten benutzt werden.

Bei einem zweiten bevorzugten Ausführungsbeispiel wird berücksichtigt, dass bei einer Reihenschaltung von Batteriezellen die Ladeschlussspannung des gesamten Zellblocks in der Regel niedriger ist, als die Summe der Ladeschlussspannungen der einzelnen Batteriezellen.

Bei der Kapazitätsmessung wird daher zunächst der Zellblock bis auf seine Ladeschlussspannung geladen und anschließend jede einzelne Batteriezelle mit Hilfe der ihr zugeordneten Hilfs-Lade/Entladeeinrichtungen bis zum Erreichen ihrer Ladeschlussspannung weiter geladen.

Aus dem zeitlichen Verlauf des Entladestromes zwischen dem geladenen Zustand der Batteriezellen und dem Erreichen der Entladeschlussspannung der jeweiligen Batteriezelle ergibt sich dann wiederum die Kapazität der entsprechenden Batteriezelle. Dabei wird zunächst der gesamte Zellblock über den Reihenentladestrom bis zu einer Entladetiefe (DoD) von 80% entladen (d.h. der Zellblock besitzt noch eine Restkapazität von 20%). Anschließend wird wiederum jede einzelne Batteriezelle über die ihr zugeordnete Hilfs-Lade/Entladeeinrichtung auf ihre jeweilige Entladeschlussspannung entladen.

Auch in diesem Fall kann zur Messung der Kapazitäten der Batteriezellen der zeitliche Verlauf des jeweiligen Ladevorganges herangezogen werden oder es kann ein Mittelwert zwischen den bei der Ladung und Entladung der Batterien ermittelten Kapazitätswerte benutzt werden.

Weitere Einzelheiten und Vorteile der Erfindung ergeben sich aus dem folgenden, anhand eines Blockschaltbildes beschriebenen Ausführungsbeispiel.

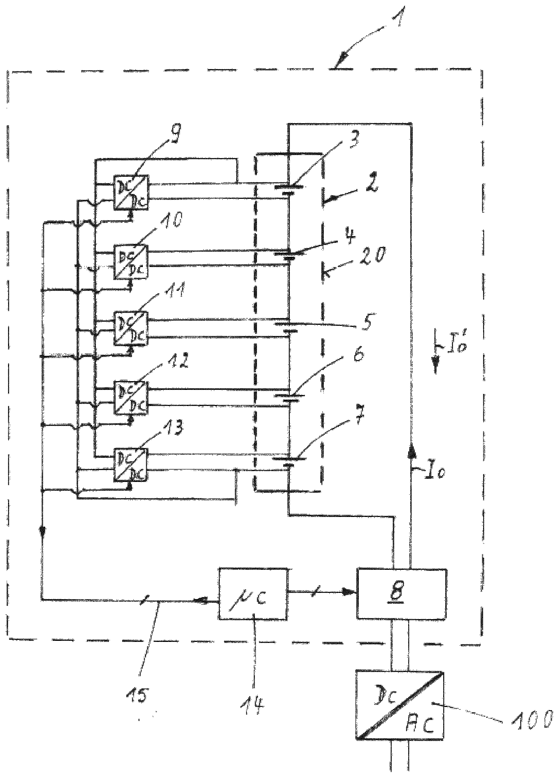

In der Figur ist mit 1 eine Vorrichtung zum Aufladen und Entladen eines mit 2 bezeichneten Energiespeichers dargestellt, der beispielsweise zur Energieversorgung eines Versorgungsnetzes eines Gebäudes dient und durch eine Anlage zur Erzeugung regenerativer Energie (Photovoltaikanlage, Windstromanlage, Biogasanlage etc.) beispielsweise über einen bidirektionalen AC/DC-Wandler 100 auf- und entladbar ist.

Der Energiespeicher 2 umfasst bei dem dargestellten Ausführungsbeispiel einen Zellblock 20 mit fünf seriell miteinander verbundene, wiederaufladbare Batteriezellen 3-7 und ist durch eine regelbare Haupt-Lade-/Entladeeinrichtung 8 auf- bzw. entladbar.

Außerdem ist jede der Batteriezellen 3-7 über eine ihr zugeordnete, regelbare Hilfs-Lade-/Entladeeinrichtung 9-13 mit dem Zellblock 20 verbunden. Bei den Hilfs-Lade-/Entladeeinrichtungen 9-13 handelt es sich vorzugsweise um steuerbare bidirektionale DC/DC-Wandler.

Zur Kontrolle des Lade- bzw. Entladezustandes der einzelnen Batteriezellen 3-7 ist eine Kontroll- und Steuereinrichtung 14 vorgesehen, die über entsprechende Datenleitungen 15 sowohl mit den Hilfs-Lade-/Entladeeinrichtungen 9-13 als auch mit der Haupt-Lade-/Entladeeinrichtung 8 verbunden ist.

Nachfolgend wird der Ladevorgang des Energiespeichers 2 der erfindungsgemäßen Vorrichtung 1 näher beschrieben:
Zunächst werden die Kapazitäten C_{N} der einzelnen Batteriezellen 3-7 gemessen und in einem Speicher einer Kontroll- und Steuereinrichtung 14 abgelegt (beispielsweise betragen die Kapazitäten C₃, C₅, C₆ der Batteriezellen 3, 5 und 6 etwa 2 Ah, die Kapazität C₄ der Batteriezelle 4 etwa 2,5 Ah und die Kapazität C₇ der Batteriezelle 7 etwa 3 Ah).

Sollen die einzelnen Batteriezellen 3-7 später beispielsweise mit einem Ladestrom von 1C (der C-Faktor bildet den Quotient von maximalem Ladungstromes I_{N;max} zur Kapazität C_{N}) geladen werden, dann berechnet die Kontroll- und Steuereinrichtung 14 anschließend für die einzelnen Batteriezellen 3-7 die maximalen Ladeströme I_{N;max} (bei den o.e. Kapazitäten betragen diese dann mit I_{N;max} = C x C_{N} für die Batteriezellen 3, 5, und 6 jeweils 2 A und für die Batteriezellen 4 und 7 ergeben sich 2,5 und 3A) und legt diese Werte ebenfalls in einem entsprechenden Speicher ab.

Sobald nun eine nicht dargestellte Kontrolleinrichtung ermittelt, dass die Energie beispielsweise einer Anlage zur Erzeugung regenerativer Energie größer ist als die von dem Versorgungsnetz benötigte Energie, gelangt mindestens ein Teil der Überschussenergie über den AC/DC-Wandler 100 an die Haupt-Lade-/Entladeeinrichtung 8 der erfindungsgemäßen Vorrichtung 1. Die Vorrichtung 1 erzeugt daraufhin einen seriellen Ladestrom I_{O} vorgegebener Stärke.

Um nun gleichzeitig alle Batteriezellen 3-7 mit den diesen Zellen zugeordneten maximalen Ladeströmen I_{N;max} aufzuladen, sorgt die Kontroll- und Steuereinrichtung 14 aufgrund des gewählten seriellen Ladestromes I_{O} dafür, dass die Batteriezellen 3-7, deren maximaler Ladestrom I_{N;max} dem seriellen Ladestrom lo entspricht, nur von dem seriellen Ladestrom I_{O} geladen werden. Die Batteriezellen 3-7, deren maximaler Ladestrom I_{N;max} hingegen größer als der serielle Ladestrom I_{O} ist, werden gleichzeitig von dem seriellen Ladestrom I_{O} und von den dem Zellblock 20 mittels entsprechender Hilfs-Lade-/Entladeeinrichtungen 9-13 entnehmbaren Hilfs-Ladeströmen I_{N} geladen, für die gilt: I_{N} = I_{N;max} - I_{O}. Schließlich werden die Batteriezellen 3-7, deren maximaler Ladestrom I_{N;max} kleiner als der serielle Ladestrom I_{O} ist, von dem ersten Ladestrom I_{O} geladen, wobei gleichzeitig die die maximalen Ladeströme I_{N;max} übersteigenden Ströme: I_{O} - I_{N;max} als Entladeströme dem Zellblock 20 zugeführt werden.

Wird also beispielsweise der serielle Ladestrom I_{O} derart gewählt, dass die Batteriezellen 3, 5, 6 mit der geringsten Kapazität (bei dem o.c. Beispiel jeweils 2Ah) mit ihrem maximalen Ladestrom (Iₘₐₓ = 2A) geladen werden (I_{O} beträgt also 2A), so müssen die weiteren Batteriezellen 4 und 7 zusätzlich zu dem seriellen Ladestrom I_{O} jeweils mit einem maximalen Hilfsladestrom (von 0,5A bzw. 1A) aus der ihnen zugeordneten Hilfs-Lade-/Entladeeinrichtung 10 und 13 geladen werden, der sich aus der Differenz zwischen der Kapazität der jeweiligen Batteriezelle (4, 7) und der Batteriezelle mit der geringsten Kapazität (hier die Batteriezellen 3, 5 und 6) ergibt.

Durch Überwachung der Ladeschlussspannungen an den Batteriezellen 3-7 überwacht die Kontroll- und Steuereinrichtung 14 die Ladezeit, während der die Batteriezellen 3-7 mit ihrem maximalen Ladestrom geladen werden können, ohne dass es zu einer Überladung der jeweiligen Batteriezelle kommt (in dem vorstehenden Beispiel beträgt tmax = 1/C = 60min).

Sofern beispielsweise aufgrund der geringen zur Verfügung stehenden Spannung einer Energiequelle die berechneten maximalen Ladeströme (I_{N;max}) alle größer sind als der zur Verfügung stehende serielle Ladestrom (lo), erfolgt die gleichzeitige Aufladung aller Batteriezellen mit Ladeströmen, deren Werte im gleichen Verhältnis wie die berechneten maximalen Ladeströme (I_{N;max}) zueinander stehen. Wenn also in dem vorstehend erwähnten Ausführungsbeispiel der serielle Ladestrom I_{O} lediglich 1A beträgt, so werden die Batteriezellen 3, 5 und 6 mit 1A, die Batteriezelle 4 mit 1,25A und die Batteriezelle 7 mit 1,5A aufgeladen.

Um die Kapazitäten der Batteriezellen 3-7 in vorgegebenen zeitlichen Abständen (z.B. nach jeweils 100 Lade-/Entladezyklen) automatisch mit den in Serie geschalteten Batteriezellen 3-7 zu ermitteln, wird zunächst der Zellblock 20 bis auf seine Ladeschlussspannung geladen und anschließend jede einzelne Batteriezelle 3-7 mit Hilfe der ihr zugeordneten Hilfs-Lade/Entladeeinrichtungen 9-13 bis zum Erreichen ihrer Ladeschlussspannung weiter geladen.

Nach dem Aufladen aller Batteriezellen 3-7 erfolgt dann mittels der Vorrichtung 1 ein definiertes Entladen der Batteriezellen 3-7. Dabei wird zunächst der gesamte Zellblock 20 über mit einem von der Haupt-Lade-/Entladeeinrichtung 8 vorgegebenen seriellen Entladestrom I_{O}', bis zu einer Entladetiefe (DoD) von 80% entladen. Anschließend wird jede einzelne Batteriezelle 3-7 über die ihr zugeordnete Hilfs-Lade/Entladeeinrichtung 9-13 auf ihre jeweilige Entladeschlussspannung entladen.

Aus dem gemessenen Verlauf des seriellen Entladestromes I_{O}' zwischen dem Beginn der Entladung aller Batteriezellen 3-7 und dem Erreichen der Entladeschlussspannung der jeweiligen Batteriezelle kann dann die Kapazität C_{N} der entsprechenden Batteriezelle ermittelt werden.

Allerdings kann zur Messung der Kapazitäten der Batteriezellen auch der zeitliche Verlauf des jeweiligen Ladevorganges herangezogen werden, oder es kann ein Mittelwert zwischen den bei der Ladung und Entladung der Batterien ermittelten Kapazitätswerten benutzt werden.

Die Erfindung ist selbstverständlich nicht auf das vorliegende Ausführungsbeispiel beschränkt.

So kann beispielsweise die Ermittlung der Kapazitäten der Batteriezellen 3-7 auch dadurch erfolgen, dass zunächst alle Batteriezellen 3-7 bis zum Erreichen ihrer Ladeschlussspannung mit Hilfe eines von der Haupt-Lade-/Entladeeinrichtung 8 erzeugten seriellen Ladestrom I_{O} geladen werden. Um dabei ein Überladen derjenigen Batteriezellen, die eine geringere Ladeschlussspannung als die Batteriezelle(n) mit der maximalen Kapazität (in dem vorstehenden Beispiel die Batteriezelle 7) besitzen, zu verhindern, wird der überschüssige Strom über die ihnen jeweils zugeordnete Hilfs-Lade-/Entladeeinrichtung 9-13 dem Zellblock 20 zugeführt.

Nach dem Aufladen aller Batteriezellen 3-7 erfolgt dann mittels der Vorrichtung 1 ein definiertes Entladen der Batteriezellen 3-7. Hierzu erfolgt die Entladung der Batteriezellen 3-7 mit einem von der Haupt-Lade-/Entladeeinrichtung 8 vorgegebenen seriellen Entladestrom I_{O}', und zwar so lange, bis die Entladeschlussspannungen der Batteriezelle mit der größten Kapazität erreicht ist. Um zu vermeiden, dass diejenigen Batteriezellen, die vor der Batterie mit der größten Kapazität ihre Entladeschlussspannungen erreicht haben, unterladen werden, wird diesen Batteriezellen nach Erreichen ihrer Entladeschlussspannungen mittels der ihnen zugeordneten Hilfs-Lade-/Entladeeinrichtung aus dem Zellblock 20 Hilfsladestrom zugeführt.

Aus dem gemessenen Verlauf des seriellen Entladestromes I_{O}' zwischen dem Beginn der Entladung aller Batteriezellen 3-7 und dem Erreichen der Entladeschlussspannung der jeweiligen Batteriezelle kann dann die Kapazität C_{N} der entsprechenden Batteriezelle ermittelt werden.

Ferner brauchen die Kapazitäten nicht aller Batteriezellen in einem Lade-/Entladezyklus ermittelt werden. Vielmehr kann es auch vorteilhaft sein, die Kapazitäten der Batteriezellen nacheinander in mehreren Lade-/Entladezyklen zu bestimmen.

Außerdem muss der serielle Lade- oder Entladestrom selbstverständlich nicht zwingend derart gewählt werden, dass er dem maximalen Lade- oder Entladestrom der Batteriezelle mit der geringsten Kapazität entspricht. Vielmehr kann er beispielsweise auch derart gewählt werden, dass er dem maximalen Lade- oder Entladestrom einer Batteriezelle mit einer mittleren Kapazität oder einer Batteriezelle mit der höchsten Kapazität entspricht etc.

Schließlich kann der Energiespeicher auch aus mehreren, serielle Batteriespeicher umfassenden Zellblöcken bestehen.

### Bezugszeichenliste

- 1: Vorrichtung
- 2: Energiespeicher
- 20: Zellblock
- 3-7: Batteriezellen, Zellen
- 8: Haupt-Lade-/Entladeeinrichtung
- 9-13: Hilfs-Lade-/Entladeeinrichtungen
- 14: Kontroll- und Steuereinrichtung
- 15: Datenleitung
- I_{O}: serieller Ladestrom
- I_{O}': serieller Entladestrom

## Patentansprüche

1. Verfahren zum Aufladen eines Energiespeichers (2) mit mindestens einem aus mehreren seriell miteinander verbundenen Batteriezellen (3-7) bestehenden Zellblock (20) mittels eines durch alle Batteriezellen (3-7) fließenden seriellen Ladestromes I_{O}, wobei mindestens einige der Batteriezellen (3-7) unterschiedliche Kapazitäten C_{N} aufweisen können, mit den Merkmalen:
a) in vorgegebenen zeitlichen Abständen werden die Kapazitäten C_{N} der einzelnen Batteriezellen (3-7) gemessen und in einem Speicher einer Kontroll- und Steuereinrichtung (14) abgelegt;
b) unter Berücksichtigung eines vorgegebenen C-Faktors, welcher dem Quotient von maximalem Ladestrom I_{N;max} zur Kapazität C_{N} entspricht, werden dann die für die einzelnen Kapazitäten C_{N} charakteristischen maximalen Ladeströme I_{N;max} von der Kontroll- und Steuereinrichtung (14) bestimmt;
c) anschließend erfolgt während einer vorgegebenen Zeit t ≤ 1/C-Faktor das Aufladen der Batteriezellen (3-7) gleichzeitig mit den diesen Batteriezellen (3-7) zugeordneten maximalen Ladeströmen I_{N;max}, wobei
- die Batteriezellen (3-7), deren maximaler Ladestrom I_{N;max} dem seriellen Ladestrom I_{O} entspricht, nur von dem seriellen Ladestrom I_{O} geladen werden,
- die Batteriezellen (3-7), deren maximaler Ladestrom I_{N;max} größer als der serielle Ladestrom I_{O} ist, gleichzeitig von dem seriellen Ladestrom I_{O} und über Hilfs-Lade-/Entladeeinrichtungen (9-13) von dem Zellblock (20) entnehmbaren Hilfs-Ladeströmen I_{N} geladen werden, für die gilt: IN = I_{N;max} - I_{O}, und
- die Batteriezellen (3-7), deren maximaler Ladestrom I_{N;max} kleiner als der serielle Ladestrom I_{O} ist, von dem seriellen Ladestrom I_{O} geladen werden, wobei gleichzeitig die die maximalen Ladeströme I_{N;max} übersteigenden Ströme: I_{O} - I_{N;max} über entsprechende Hilfs-Lade-/Entladeeinrichtungen als Hilfsentladeströme dem Zellblock (20) zugeführt werden,
oder, wenn die berechneten maximalen Ladeströme I_{N;max} alle größer sind als der zur Verfügung stehende serielle Ladestrom I_{O}, gleichzeitig mit Ladeströmen, deren Werte im gleichen Verhältnis wie die berechneten maximalen Ladeströme I_{N;max} zueinander stehen.

2. Verfahren zum Entladen eines Energiespeichers (2) mit mindestens einem aus mehreren seriell miteinander verbundenen Batteriezellen (3-7) bestehenden Zellblock (20) mittels eines durch alle Batteriezellen (3-7) fließenden seriellen Entladestromes I_{O}', wobei mindestens einige der Batteriezellen (3-7) unterschiedliche Kapazitäten C_{N} aufweisen können, mit den Merkmalen:
a) in vorgegebenen zeitlichen Abständen werden die Kapazitäten C_{N} der einzelnen Batteriezellen (3-7) gemessen und in einem Speicher einer Kontroll- und Steuereinrichtung (14) abgelegt;
b) unter Berücksichtigung eines vorgegebenen C-Faktors, welcher dem Quotient von maximalem Entladestrom I_{N;max} zur Kapazität C_{N} entspricht, werden dann die für die einzelnen Kapazitäten C_{N} charakteristischen maximalen Entladeströme I_{N;max} von der Kontroll- und Steuereinrichtung (14) bestimmt;
c) anschließend erfolgt während einer vorgegebenen Zeit t ≤ 1/C-Faktor das Entladen der Batteriezellen (3-7) mit den diesen Batteriezellen (3-7) zugeordneten maximalen Entladeströmen I_{N;max}, wobei gleichzeitig
- die Batteriezellen (3-7), deren maximaler Entladestrom I_{N;max} dem seriellen Entladestrom I_{O}' entspricht, nur von dem seriellen Entladestrom I_{O}' entladen werden,
- die Batteriezellen (3-7), deren maximaler Entladestrom I_{N;max} größer als der serielle Entladestrom I_{O}' ist, gleichzeitig von dem seriellen Entladestrom I_{O}' und über Hilfs-Lade-/Entladeeinrichtungen (9-13) von dem Zellblock (20) zuführbaren Hilfs-Entladeströmen I_{N}' entladen werden, für die gilt: I_{N}' = I_{N;max} - I_{O}' und
- die Batteriezellen (3-7), deren maximaler Entladestrom I_{N;max} kleiner als der serielle Entladestrom I_{O}' ist, von dem seriellen Entladestrom I_{O}' geladen werden, wobei gleichzeitig die die maximalen Entladeströme übersteigenden Ströme: I_{O}' - I_{N;max} über entsprechende Hilfs-Lade-/Entladeeinrichtungen (9-13) als Hilfsladeströme dem Zellblock (20) zugeführt werden.

3. Verfahren nach Anspruch 1, **dadurch gekennzeichnet, dass** der serielle Ladestrom I_{O} derart gewählt wird, dass die Batteriezelle (3-7) mit der geringsten Kapazität mit ihrem maximalen Ladestrom geladen wird und dass die weiteren Batteriezellen (3-7) zusätzlich zu dem seriellen Ladestrom I_{O} jeweils mit einem maximalen Hilfsladestrom geladen werden, der sich aus der Differenz zwischen der Kapazität der jeweiligen Batteriezelle und der Batteriezelle mit der geringsten Kapazität ergibt.

4. Verfahren nach Anspruch 1, **dadurch gekennzeichnet, dass** der serielle Ladestrom I_{O} derart gewählt wird, dass er dem maximalen Ladestrom einer Batteriezelle (3-7) entspricht, die eine aus allen Batteriezellen (3-7) ermittelte mittlere Kapazität aufweist, dass während des Ladevorganges bei den Batteriezellen (3-7), die eine geringere Kapazität als die mittlere Kapazität aufweisen, ein Teil des seriellen Ladestromes I_{O} wieder dem Zellblock zugeführt wird, und dass die Batteriezellen, die eine höhere Kapazität besitzen als die mittlere Kapazität, gleichzeitig von dem Ladestrom I_{O} und von der Gesamtbatterie entnehmbaren Hilfs-Ladeströmen geladen werden.

5. Verfahren nach Anspruch 1, **dadurch gekennzeichnet, dass** der serielle Ladestrom Io derart gewählt wird, dass die Batteriezelle (3-7) mit der höchsten Kapazität mit ihrem maximalen Ladestrom geladen wird und dass die weiteren Batteriezellen (3-7) nur teilweise von dem seriellen Ladestrom I_{O} geladen werden und die ihre maximalen Ladeströme übersteigenden Stromanteile dem Zellblock (20) zugeführt werden.

6. Verfahren nach einem der Ansprüche 1 bis 5, **dadurch gekennzeichnet, dass** die Kapazitäten der einzelnen Batteriezellen (3-7) eines Zellblocks (20) automatisch bei in Serie geschalteten Batteriezellen (3-7) gemessen werden.

7. Verfahren nach Anspruch 6, **dadurch gekennzeichnet,**
**dass** zunächst der gesamte Zellblock (20) bis zum Erreichen seiner Ladeschlussspannung durch den seriellen Ladestrom Io geladen wird und anschließend jede einzelne Batteriezelle (3-7) des Zellblockes (20) mit Hilfe der ihr zugeordneten Hilfs-Lade/Entladeeinrichtungen (9-13) bis zum Erreichen ihrer Ladeschlussspannung weiter geladen wird,
**dass** dann der Zellblock (20) mit einem seriellen Entladestrom I_{O}' bis zu einer Entladetiefe von 80% entladen wird und anschließend jede einzelne Batteriezelle (3-7) über die ihr zugeordnete Hilfs-Lade/Entladeeinrichtung (9-13) auf ihre jeweilige Entladeschlussspannung entladen wird, und
**dass** schließlich aus den über die Zeit integrierten Entladeströmen des Zellblockes und der einzelnen Batteriezellen deren Kapazitäten ermittelt werden.

8. Verfahren nach Anspruch 6, **dadurch gekennzeichnet,**
**dass** zunächst alle Batteriezellen (3-7) bis zum Erreichen ihrer Ladeschlussspannung durch den seriellen Ladestrom Io geladen werden, wobei ein Überladen derjenigen Batteriezellen (3-7), die eine geringere Ladeschlussspannung als die Batteriezellen (3-7) mit der maximalen Kapazität besitzen, dadurch verhindert wird, dass der überschüssige Strom über die ihnen jeweils zugeordneten Hilfs-Lade-/Entladeeinrichtungen (913) dem Zellblock (20) zugeführt wird,
**dass** anschließend die Batteriezellen (3-7) mit einem vorgegebenen seriellen Entladestrom I_{O}' so lange entladen werden, bis die Entladeschlussspannungen der Batteriezelle (3-7) mit der größten Kapazität erreicht wird, wobei zur Vermeidung von Unterladungen derjenigen Batteriezellen (3-7), die vor der Batterie (3-7) mit der größten Kapazität ihre Entladeschlussspannungen erreicht haben, diesen Batteriezellen (3-7) über die ihnen zugeordneten Hilfs-Lade-/Entladeeinrichtungen (9-13) aus dem Zellblock (20) Hilfsladeströme zugeführt werden, und
**dass** aus den gemessenen zeitlichen Verläufen des Entladestromes I_{O}' zwischen dem geladenen Zustand aller Batteriezellen (3-7) und dem Erreichen der Entladeschlussspannung der jeweiligen Batteriezelle (3-7) dann deren Kapazität ermittelt wird.

9. Verfahren nach Anspruch 7 oder 8, **dadurch gekennzeichnet, dass** zur Ermittlung der Kapazitäten der Batteriezellen auch der zeitliche Verlauf des jeweiligen Ladevorganges herangezogen wird und als Kapazität der jeweiligen Batteriezelle der Mittelwert zwischen den bei der Ladung und der Entladung der entsprechenden Batterien gemessenen Kapazitätswerte dient.

## Claims

1. Method for charging an energy store (2) with at least one cell block (20) comprising multiple series-connected battery cells (3-7) by means of a series charging current I₀ flowing through all battery cells (3-7), wherein at least some of the battery cells (3-7) can have different capacitances C_{N}, with the characteristics:
a) at predefined time intervals, the capacitances C_{N} of the individual battery cells (3-7) are measured and stored in a memory of a monitoring and control device (14);
b) taking into consideration a predefined C-factor, which corresponds to the quotient of maximum charging current I_{N;max} to capacity C_{N}, the maximum charging currents I_{N;max} that are characteristic of the individual capacitances C_{N} are then determined by the monitoring and control device (14);
c) then, during a predefined time t ≤ 1/C-factor, the battery cells (3-7) are charged simultaneously at the maximum charging currents I_{N;max} assigned to these battery cells (3-7), wherein
- the battery cells (3-7) with a maximum charging current I_{N;max} that corresponds to the series charging current I₀ are charged only by the series charging current I₀,
- the battery cells (3-7) with a maximum charging current I_{N;max} that is greater than the series charging current I₀ are simultaneously charged by the series charging current I₀ and by auxiliary charging currents I_{N} that can be removed from the cell block (20) via auxiliary charging/discharging devices (9-13), for which: I_{N}=I_{N;max}-I₀, and
- the battery cells (3-7) with a maximum charging current I_{N;max} that is lower than the series charging current I₀ are charged by the series charging current I₀, wherein the currents that exceed the maximum charging currents I_{N;max}: I₀-I_{N;max} are simultaneously supplied to the cell block (20) as auxiliary discharging currents via corresponding auxiliary charging/discharging devices,
or, if the calculated maximum charging currents I_{N;max} are all greater than the available series charging current I₀, simultaneously at charging currents with values that are in the same ratio to one another as the calculated maximum charging currents I_{N;max}.

2. Method for discharging an energy store (2) with at least one cell block (20) comprising multiple series-connected battery cells (3-7) by means of a series discharging current I₀' flowing through all battery cells (3-7), wherein at least some of the battery cells (3-7) can have different capacitances C_{N}, with the characteristics:
a) at predefined time intervals, the capacitances C_{N} of the individual battery cells (3-7) are measured and stored in a memory of a monitoring and control device (14);
b) taking into consideration a predefined C-factor, which corresponds to the quotient of maximum discharging current I_{N;max} to capacity C_{N}, the maximum discharging currents I_{N;max} that are characteristic of the individual capacitances C_{N} are then determined by the monitoring and control device (14);
c) then, during a predefined time t≤1/C-factor, the battery cells (3-7) are discharged at the maximum discharging currents I_{N;max} assigned to these battery cells (3-7), wherein simultaneously
- the battery cells (3-7) with a maximum discharging current I_{N;max} that corresponds to the series discharging current I₀' are only discharged by the series discharging current I₀',
- the battery cells (3-7) with a maximum discharging current I_{N;max} that is greater than the series discharging current I₀' are discharged simultaneously by the series discharging current I₀' and by the auxiliary discharging currents I_{N}' that can be supplied from the cell block (20) via auxiliary charging/discharging devices (9-13), for which: I_{N}'=I_{N;max}-I₀', and
- the battery cells (3-7) with a maximum discharging current I_{N;max} that is lower than the series discharging current I₀' are discharged by the series discharging current I₀', wherein the currents exceeding the maximum discharging currents: I₀' -I_{N;max} are simultaneously supplied to the cell block (20) as auxiliary charging currents via corresponding auxiliary charging/discharging devices (9-13).

3. Method according to claim 1, **characterized in that** the series charging current I₀ is selected in such a way that the battery cell (3-7) with the lowest capacitance is charged at its maximum charging current, and wherein the other battery cells (3-7) are each charged, in addition to the series charging current I₀, at a maximum auxiliary charging current that results from the difference between the capacitance of the respective battery cell and the battery cell with the lowest capacitance.

4. Method according to claim 1, **characterized in that** the series charging current I₀ is selected in such a way that it corresponds to the maximum charging current of a battery cell (3-7) that has an average capacitance determined from all of the battery cells (3-7), wherein during the charging process at the battery cells (3-7) that have a lower capacitance than the average capacitance, a part of the series charging current I₀ is supplied back to the cell block, and wherein the battery cells that have a higher capacitance than the average capacitance are charged simultaneously by the charging current I₀ and auxiliary charging currents that can be removed from the overall battery.

5. Method according to claim 1, **characterized in that** the series charging current I₀ is selected in such a way that the battery cell (3-7) with the highest capacitance is charged at its maximum charging current, and wherein the other battery cells (3-7) are only partially charged by the series charging current I₀ and the proportions of current exceeding their maximum charging currents are supplied to the cell block (20).

6. Method according to one of the claims 1 to 5, **characterized in that** the capacitances of the individual battery cells (3-7) of a cell block (20) are automatically measured with series-connected battery cells (3-7).

7. Method according to claim 6, **characterized in that**
firstly, the entire cell block (20) is charged by the series charging current I₀ until its end-of-charge voltage is reached and then each individual battery cell (3-7) of the cell block (20) is further charged with the aid of the auxiliary charging/discharging devices (9-13) assigned to it until its end-of-charge voltage is reached,
then, the cell block (20) is then discharged with a series discharging current I₀' to a depth of discharge of 80% and each individual battery cell (3-7) is then discharged to its respective end-of-discharge voltage via the auxiliary charging/discharging device (9-13) assigned to it, and
finally, their capacitances are determined from the discharging currents of the cell block and the individual battery cells integrated over time.

8. Method according to claim 6, **characterized in that**
firstly, all of the battery cells (3-7) are charged by the series charging current I₀ until they reach their end-of-charge voltage, wherein overcharging of those battery cells (3-7) that have a lower end-of-charge voltage than the battery cells (3-7) with the maximum capacitance is prevented by the surplus current being supplied via the auxiliary charging/discharging devices (9-13), that are respectively assigned to them, to the cell block (20),
the battery cells (3-7) are then discharged with a predefined series discharging current I₀' until the end-of-discharge voltage of the battery cell (3-7) with the greatest capacitance is reached, wherein, in order to avoid undercharging of those battery cells (3-7) that have reached their end-of-discharge voltages before the battery (3-7) with the greatest capacitance, auxiliary charging currents are supplied to these battery cells (3-7) from the cell block (20) via the auxiliary charging/discharging devices (9-13) assigned to them, and
the capacitance of each battery cell (3-7) is then determined from the measured time courses of the discharging current I₀' between the charged state of all battery cells (3-7) and the respective battery cell (3-7) reaching the end-of-discharge voltage.

9. Method according to claim 7 or 8, **characterized in that** the time course of the respective charging process is also used to determine the capacitances of the battery cells and the average value between the capacitance values measured during charging and discharging of the corresponding batteries is used as the capacitance of the respective battery cell.

## Revendications

1. Procédé de charge d'un accumulateur d'énergie (2) constitué au moins d'un bloc (20) de plusieurs cellules de batterie (3-7) connectées entre elles en série, avec un courant de charge série I_{O} qui traverse toutes les cellules (3-7), quelques-unes d'entre elles (3-7) au moins pouvant présenter des capacités C_{N} différentes, ce procédé étant caractérisé comme suit :
a) aux intervalles de temps prédéfinis, les capacités C_{N} des différentes cellules (3-7) sont mesurées et enregistrées dans une mémoire d'un dispositif de contrôle et de commande (14) ;
b) en tenant compte d'un facteur C prédéfini correspondant au quotient du courant de charge maximal I_{N;max} et de la capacité C_{N}, les courants de charge maximaux caractéristiques I_{N;max} sont alors déterminés par le dispositif de contrôle et de commande (14) pour les différentes capacités CN ;
c) ensuite, pendant un intervalle de temps t ≤ 1/facteur C prédéfini, la charge des cellules (3-7) s'effectue simultanément avec les courants maximaux I_{N;max}, affectés à ces cellules (3-7),
- les cellules (3-7) dont le courant de charge maximal I_{N;max} correspond au courant série I_{O}, étant seulement chargées avec le courant de charge série I_{O},
- les cellules (3-7) dont le courant de charge maximal I_{N;max} dépasse le courant de charge série I_{O} étant chargées simultanément avec le courant de charge série I_{O} et les courants de charge auxiliaires I_{N} pouvant être prélevés du bloc (20) à l'aide de dispositifs de charge/décharge auxiliaires (9-13), l'équation IN = IN;max - I_{O} s'appliquant, et
- les cellules (3-7) dont le courant de charge maximal I_{N;max} est inférieur au courant de charge série I_{O}, étant chargées avec le courant de charge série I_{O}, les courants supérieurs aux courants de charge maximaux I_{N;max} : I_{O} - I_{N;max} étant parallèlement amenés comme courants de décharge auxiliaires au bloc (20) par l'intermédiaire de dispositifs de charge/décharge auxiliaires correspondants,
ou, si les courants de charge maximaux I_{N;max} calculés sont tous supérieurs au courant de charge série I_{O} disponible, étant chargées simultanément avec des courants de charge dont les valeurs ont le même rapport entre elles que les courants de charge maximaux I_{N;max} calculés.

2. Procédé de décharge d'un accumulateur d'énergie (2) constitué au moins d'un bloc (20) de plusieurs cellules de batterie (3-7) connectées entre elles en série, avec un courant de décharge série I_{O}' qui traverse toutes les cellules (3-7), quelques cellules (3-7) au moins pouvant présenter des capacités C_{N} différentes, ce procédé étant caractérisé comme suit :
a) aux intervalles de temps prédéfinis, les capacités C_{N} des différentes cellules (3-7) sont mesurées et enregistrées dans une mémoire d'un dispositif de contrôle et de commande (14) ;
b) en tenant compte d'un facteur C prédéfini qui correspond au quotient du courant de décharge maximal I_{N;max} et de la capacité C_{N}, les courants de décharge maximaux caractéristiques I_{N;max} sont alors déterminés par le dispositif de contrôle et de commande (14) pour les différentes capacités CN ;
c) ensuite, pendant un intervalle de temps t ≤ 1/facteur C prédéfini, les cellules (3-7) sont déchargées avec les courants de décharge maximaux I_{N;max}, affectés à ces cellules (3-7),
- les cellules (3-7) dont le courant de décharge maximal I_{N;max} correspond au courant de décharge série I_{O}' étant simultanément déchargées uniquement avec le courant de décharge série I_{O}',
- les cellules (3-7) dont le courant de décharge maximal I_{N;max} est supérieur au courant de décharge série I_{O}',étant déchargées simultanément avec le courant de décharge série I_{O}' et avec les courants de décharge auxiliaires I_{N}' pouvant être amenés au bloc (20), par le biais de dispositifs de charge/décharge auxiliaires (9-13), l'équation I_{N}' = I_{N;max} - I_{O}' s'appliquant, et
- les cellules (3-7) dont le courant de décharge maximal I_{N;max} est inférieur au courant de décharge série I_{O}' étant déchargées avec le courant de décharge série I_{O}',les courants supérieurs aux courants de décharge maximaux : I_{O}' - I_{N;max} étant parallèlement amenés comme courants de charge auxiliaires au bloc (20) par l'intermédiaire de dispositifs de charge/décharge auxiliaires (9-13) correspondants,

3. Procédé selon la revendication 1, **caractérisé en ce que** le courant de charge série I_{O} est sélectionné de telle façon que la cellule (3-7) présentant la plus faible capacité est chargée avec le courant maximal, et que les autres cellules (3-7) sont chargées en plus du courant de charge série I_{O} respectivement avec un courant de charge auxiliaire maximal correspondant à la différence entre la capacité de la cellule correspondante et la cellule ayant la plus faible capacité.

4. Procédé selon la revendication 1, **caractérisé en ce que** le courant de charge série I_{O} est sélectionné de telle sorte qu'il correspond au courant de charge maximal d'une cellule (3-7) présentant une capacité moyenne déterminée à partir de toutes les cellules (3-7) et **caractérisé en ce que**, lors de la charge des cellules (3-7) ayant une capacité inférieure à la capacité moyenne, une partie du courant de charge série I_{O} regagne le bloc et que les cellules ayant une capacité supérieure à la capacité moyenne sont simultanément chargées avec le courant I_{O} et avec les courants de charge auxiliaires pouvant être prélevés de la batterie complète.

5. Procédé selon la revendication 1, **caractérisé en ce que** le courant de charge série I_{O} est sélectionné de telle façon que la cellule (3-7) ayant la plus haute capacité est chargée avec son courant de charge maximal, que les autres cellules (3-7) ne sont chargées que partiellement avec le courant série I_{O} et que les parts de courant dépassant leurs courants de charge maximaux sont amenées au bloc (20).

6. Procédé selon une des revendications 1 à 5, **caractérisé en ce que** les capacités des différentes cellules (3-7) d'un bloc (20) sont automatiquement mesurées sur les cellules (3-7) montées en série.

7. Dispositif selon la revendication 6, **caractérisé en ce que**
d'abord le bloc (20) complet est chargé avec le courant de charge série I_{O} jusqu'à l'atteinte de sa tension de charge finale et qu'ensuite chaque cellule (3-7) du bloc (20) continue à être chargée au moyen des dispositifs de charge/décharge (9-13) qui lui sont assignés jusqu'à ce qu'elle atteigne sa tension de charge finale,
**caractérisé en ce que** le bloc (20) est alors déchargé avec un courant de décharge série I_{O}' jusqu'à un niveau de décharge de 80 % et qu'ensuite chaque cellule (3-7) est déchargée à sa tension de décharge finale à l'aide du dispositif de charge/décharge auxiliaire (9-13) qui lui est affecté, et
que pour finir les capacités des différentes cellules sont déterminées à partir des courants de décharge intégrés au fil du temps du bloc et de ces cellules.

8. Dispositif selon la revendication 6, **caractérisé en ce que**
dans un premier temps toutes les cellules (3-7) sont chargées avec le courant de charge série I_{O} jusqu'à ce qu'elles atteignent leur tension de charge finale, une surcharge des cellules (3-7) possédant une tension finale de charge inférieure à celle des cellules (3-7) qui présentent la capacité maximale étant empêchée par le fait que le courant excédentaire est amené au bloc (20) par le biais des dispositifs de charge/décharge auxiliaires (9-13) qui leur sont assignés,
**caractérisé en ce que** les cellules (3-7) sont ensuite déchargées avec un courant de décharge série I_{O}' prédéfini jusqu'à ce que les tensions de décharge finales de la cellule (3-7) qui présente la plus grande capacité soient atteintes, une sous-charge des cellules (3-7) ayant atteint leurs tensions finales de décharge avant la cellule (3-7) qui présente la plus grande capacité, étant empêchée par le fait que ces cellules reçoivent par l'intermédiaire des dispositifs de charge/décharge auxiliaires (9-13) qui leur sont assignés des courants de charge auxiliaires à partir du bloc (20) et
**caractérisé en ce que** les mesures du courant de décharge I_{O}' accomplis aux intervalles définis entre l'état chargé de toutes les cellules (3-7) et l'atteinte de la tension de décharge finale de la cellule (3-7) correspondante, est utilisée pour déterminer sa capacité.

9. Procédé selon la revendication 7 ou 8 **caractérisé en ce que** la détermination des capacités des cellules tient aussi compte de l'aspect temporel de la charge correspondante et que la capacité de la cellule respective est la moyenne des valeurs de capacité des batteries correspondantes mesurées lors de la charge et de la décharge.
